(19) Europäisches Patentamt / European Patent Office / Office européen des brevets

(11) **EP 3 984 957 A1**

(12) **EUROPEAN PATENT APPLICATION**

(43) Date of publication:
**20.04.2022 Bulletin 2022/16**

(21) Application number: **20306213.8**

(22) Date of filing: **15.10.2020**

(51) International Patent Classification (IPC):
**C01F 11/18** (2006.01)   **C09D 1/00** (2006.01)
**C09C 1/02** (2006.01)

(52) Cooperative Patent Classification (CPC):
**C09C 1/021; C09D 1/00;** C01P 2004/51;
C01P 2004/61; C01P 2006/22; C01P 2006/80

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ImerTech SAS**
**75015 Paris (FR)**

(72) Inventors:
• **Briand, Amandine**
**Lostwithiel, PL22 0JT (GB)**
• **Fritzen, Petra**
**47443 Moers (DE)**
• **Preiss-Heyden, Beate**
**46485 Wesel (DE)**
• **Girard, Anaelle**
**13280 Arles (FR)**
• **Curtis, Andrew**
**Cornwall, PL25 4BT (GB)**

(74) Representative: **Haseltine Lake Kempner LLP**
**Bürkleinstrasse 10**
**80538 München (DE)**

(54) **CALCIUM CARBONATE PARTICULATE MATERIAL WITH LOW CONTENT OF WATER SOLUBLE MAGNESIUM IONS**

(57) The present disclosure relates to a calcium carbonate particulate material comprising less than about 200 ppm of water soluble magnesium ions based on the total amount of the calcium carbonate particulate material, wherein the amount of water soluble magnesium ions is determined using the method described herein. The present disclosure further relates to methods for preparing the calcium carbonate particulate materials according to the invention and to paint compositions comprising the calcium carbonate particulate materials according to the present disclosure or the calcium carbonate particulate materials obtainable by the methods according to the present disclosure.

**EP 3 984 957 A1**

**Description**

TECHNICAL FIELD

The present disclosure is directed to a calcium carbonate particulate material having a low content of water soluble magnesium ions, a method for the preparation of a calcium carbonate particulate material having a low content of water soluble magnesium ions, and a paint composition comprising the calcium carbonate particulate materials according to the present disclosure.

BACKGROUND

Calcium carbonate particulate materials, e.g., precipitated calcium carbonate (PCC) or grounded calcium carbonate (GCC) are used in a wide variety of applications, for example as fillers in compositions, such as plastic, paper and paint. The methods for manufacturing calcium carbonate particulate materials are well-known in the art. However, due to the large-scale production processes employed, it is usually not possible, economically and/or ecologically feasible to remove all by-products present in the calcium carbonate particulate materials, for example, magnesium ions and their respective salts. This is despite the presence of such by-products often being a hindrance to the use of calcium carbonate particulate materials in several applications.

For example, it has been observed that when calcium carbonate particulate material is used in paint compositions having a high pH value, *i.e.,* a high alkalinity which is frequently obtained and buffered using waterglass, gel formation frequently occurs leading to a significant viscosity increase. In cases, the paint composition is usually no longer processable or at least not processable such that an acceptable and homogenously painted substrate results. However, providing paint compositions with a high pH value is one way to reduce microbial growth in the paint compositions (which can already occur during production and storage thereof), the resulting coatings and on coated surfaces. In such a case, the addition of an organic biocide to the paint composition may no longer be required.

Microbial growth may lead to *inter alia* aesthetic degradation of the paint compositions and the resulting coatings, with the presence of, for example, mould, mildew, algae and/or bacterial growth. Furthermore, enzymes or other components released by such a microbial growth can lead to physical degradation of the paint composition prior to application and/or to physical degradation of the resulting coatings. Such a physical degradation can include an increase in porosity of the coating or a loss of adhesion of the coating to the substrate, resulting in, for example, moisture penetration through a coating on wood which can lead to microbial decay of the underlying wood. In other words, in such cases, the paint composition no longer exhibits the characteristics required from it as a coating, such as to protect wood.

As outlined above, one alternative to render paint compositions resistant to microbial growth is the usage of organic biocides in the paint compositions instead of providing the paint compositions with a high pH value. However, due to already existing regulations, for ecological reasons and/or due to customer demand, using organic biocides in paint compositions may not be possible or desirable. For example, since January 2020, all interior wall paint compositions awarded the Blue Angel label, which is a German certification for products and services that have environmentally friendly aspects, and is considered one of the first ecolabels in the world, and highly relevant for the purchase decision of customers, are no longer allowed to claim isothiazolinone based preservatives (biocides) (MIT/BIT/CMIT *etc.*).

Thus, since the usage of hitherto used organic biocides in paint compositions does no longer appear to be a viable option and future regulations are to be expected prohibiting the use of further organic biocides, providing paint compositions with a high pH value appears to be the preferable option to avoid microbial growth in paint compositions and the resulting coatings.

However, as explained above, when using calcium carbonate as extender in paint compositions having a high pH value, gel formation frequently occurs, leading to a significant viscosity increase. Nevertheless, it is desirable to use calcium carbonate instead of, for example $TiO_2$ for economic and ecological reasons.

Hence, there is a need for calcium carbonate particulate material which can *inter alia* be used in paint compositions having a high pH value.

SHORT DESCRIPTION

The present disclosure is defined in the appended claims.

In accordance with a first aspect, there is provided a calcium carbonate particulate material comprising less than about 200 ppm of water soluble magnesium ions based on the total amount of the calcium carbonate particulate material, wherein the amount of water soluble magnesium ions is determined using the method described herein.

In accordance with a second aspect, there is provided a method for preparing a calcium carbonate particulate material according to the first aspect, comprising:

- providing a calcium carbonate particulate material comprising about 200 ppm or more of water soluble magnesium ions based on the total amount of calcium carbonate material, wherein the amount of water soluble magnesium ions is determined using the method described herein;
- heating the calcium carbonate particulate to a temperature of between about 65°C and about 200°C for a duration of up to about 24 h.

In accordance with a third aspect, there is provided a calcium carbonate particulate material obtainable by the process according to the second aspect.

In accordance with a fourth aspect, there is provided a paint composition comprising the calcium carbonate particulate material according to the first, or third aspect.

Certain embodiments of the present disclosure may provide one or more of the following advantages:

- desired low content of water soluble magnesium ions in a calcium carbonate particulate material;
- desired stability of the paint compositions comprising the calcium carbonate particulate material according to the present disclosure;
- easy upscaling of the manufacturing process to large-scale industrial processes;
- economic and ecological friendly calcium carbonate material for various applications including the possibility to replace other materials currently used.

The details, examples and embodiment provided in relation to any particular one or more of the stated aspects of the present disclosure apply equally to all aspects of the present disclosure. Any combination of the embodiments, examples and embodiments described herein in all possible variations thereof is encompassed by the present disclosure unless otherwise indicated herein, or otherwise clearly contradicted by context.

It is understood that the following description concerns exemplary embodiments of the present disclosure and shall not be limiting the scope of the claims.

DETAILED DESCRIPTION

It has been surprisingly found that a calcium carbonate particulate material having a low content of water soluble magnesium ions can be produced and that paint formulations comprising calcium carbonate particulate material having a low content of water soluble magnesium ions may have improved stability. As used herein, "water soluble magnesium ions" are magnesium ions released from water soluble magnesium salts, which is dependent on the solubility of the given salt in water. The quantity of such water soluble magnesium ions can be measured by the method described herein.

The amount of water soluble magnesium ions can be sourced from one or more magnesium compounds, such as magnesium salt(s). The one or more magnesium salt(s) may be selected from: $MgCl_2$, $MgBr_2$, $MgI_2$, $MgSO_4$, $Mg(acetate)_2$, $Mg(ClO_3)_2$, $Mg(ClO_4)_2$, $Mg(BrO_3)_2$, $MgCr_2O_7$, $MgSiF_6$, $Mg(HCO_2)_2$, $Mg(IO_3)_2$, $MgMoO_4$, $MgS_2O_3$ and hydrates thereof, such as $MgCl_2$, $MgCl_2·6\ H_2O$, $MgBr_2$, $MgBr_2.6\ H_2O$, $MgI_2$, $MgI_2·8\ H_2O$, $MgSO_4$, $MgSO_4·7\ H_2O$, $Mg(acetate)_2$, $Mg(acetate)_2·4\ H_2O$, $Mg(ClO_3)_2$, $Mg(ClO_4)_2$, $Mg(ClO_4)_2 · 6\ H_2O$, $Mg(BrO_3)_2$, $Mg(BrO_3)_2 · 6\ H_2O$, $MgCr_2O_7$, $· MgSiF_6$, $MgSiFe · 6\ H_2O$, $Mg(HCO_2)_2$, $Mg(HCO_2)_2·2\ H_2O$, $Mg(IO_3)_2$, $Mg(IO_3)_2 · 4\ H_2O$, $MgMoO_4$, $MgS_2O_3 · 6\ H_2O$.

**Method to Determine Water Soluble Magnesium Ions**

In the present disclosure, the content of water soluble magnesium ions of the calcium carbonate particulate materials is determined by mixing 20 g of the calcium carbonate particulate material with 200 ml demineralised water at a temperature of 20°C and the mixture is subsequently stirred on a multi-stirrer at 400 rpm for 15 min. The slurry is then allowed to sediment for 45 min and then the filtrate is filtered through a 0.1 um millipore vacuum filter. In case the filtrate is not clear, in one or more subsequent steps, the filtrate is collected on a cellulose filter(s) having half the pore size of the previous filtration step until the filtrate is clear. The resulting filtrate is then analysed by inductively coupled plasma atomic emission spectroscopy (ICP-OES or ICP-AES) in accordance with DIN EN ISO 11885 using the iCAP 6300 from Thermo-Fisher. The result is given in ppm by weight of water soluble magnesium ions based on the total weight of the calcium carbonate particulate material.

The total magnesium content (including water soluble magnesium ions and magnesium ions in the form of non-water soluble magnesium compounds or salts) of the calcium carbonate particulate material is determined according using X-ray fluorescence (XRF). The results are given in percentage of MgO in the calcium carbonate material and the content of Mg as such is calculated accordingly.

The pH of the paint compositions is determined using a standard pH meter, such as a Mettler Toledo FiveEasy™ pH/mV bench meter.

The viscosity of the paint compositions is determined in the present disclosure using a Kinexus Pro+ at a temperature of 25°C using the cone (CP4/40 SR1877 SS) and plate (PLS61 S1555 SS) geometry. The measurement consists of three steps: (1) With an initial shear of 0.1 reciprocal seconds, the measurement is carried out for 30 seconds and a value is recorded every one second. (2) With a shear of 30 reciprocal seconds, the measurement is carried out for 30 seconds and a value is again recorded every one second. The first two steps (1) and (2) are essentially steps to equilibrate the paint composition before the following step (3) is conducted. (3) With a shear of 0.1 reciprocal seconds, the measurement is carried out for 30 minutes and a value is recorded every five seconds. In the experimental part, the above measurement may be carried out straight after the paint composition is prepared (T0), after 24 hours (T24), after 48 hours (T48), after 1 week (T1 week) and/or after 2 weeks (T2 week). All values are reported in Pa·s.

In the present disclosure the total calcium carbonate content of the calcium carbonate particulate material is determined using the Methrom Titrando 905 with Touch Control 900 (Procedure: Back titration). For example, 2.200 g of calcium carbonate particulate material and 140 ml of water in a beaker and diluted with 6 mol/L nitric acid until a pH of 1.5 is reached. A dynamic titration is carried out using 1 mol/l of sodium hydroxide until the equivalence point is reached. The consumption of nitric acid is calculated by the following formula:

$$V1(HNO_3) = V2(HNO_3) - V(NaOH)$$

V1(HNO$_3$):     Volume required to react with calcium carbonate in calcium carbonate particulate material
V2(HNO$_3$):     Volume required to reach pH 1.5 in ml (step a)
V(NaOH):     Volume required to react with excess HNO$_3$ and to reach the equivalence point in ml (step b)

The weight percentage of calcium carbonate in the calcium carbonate particulate material is calculated according to the following equation:

$$CaCO_3 \text{ (wt.\%)} = \frac{V1(HNO_3) \times c(HNO_3) - V(NaOH) \times c(NaOH)}{2 \times m(CCPM)} \times 100\ \%$$

m(CCPM):     Initial weight of calcium carbonate particulate material
V1(HNO$_3$):     Volume required to reach pH 1.5 in ml (step a)
V(NaOH):     Volume required to react with excess HNO$_3$ and to reach the equivalence point in ml (step b)
c(HNO$_3$):     Concentration of HNO$_3$ - 6 mol/l
c(NaOH):     Concentration of NaOH - 1 mol/l

The $d_{50}$ particle size of the calcium carbonate particulate material is measured in a well-known manner by sedimentation of the calcium carbonate particulate material in a fully dispersed condition in an aqueous medium using a Sedigraph 5100 machine as supplied by Micromeritics Instruments Corporation, Norcross, Georgia, USA (telephone: +1 770 662 3620; web-site: www.micromeritics.com), referred to herein as a "Micromeritics Sedigraph 5100 unit". Such a machine provides measurements and a plot of the cumulative percentage by weight of particles having a size, referred to in the art as the 'equivalent spherical diameter' (esd), less than given esd values. The median particle size $d_{50}$ is the value determined in this way of the particle esd at which there are 50% by weight of the particles which have an equivalent spherical diameter less than that $d_{50}$ value

*Calcium carbonate particulate material*

The calcium carbonate particulate material according to the first aspect comprises less than about 200 ppm of water soluble magnesium ions based on the total amount of calcium carbonate material, wherein the amount of water soluble magnesium ions is determined using the method described herein.

In some embodiments, the calcium carbonate particulate material comprises less than about 190 ppm of water soluble magnesium ions based on the total amount of the calcium carbonate particulate material, for example, or less than about 180 ppm, or less than about 170 ppm, or less than about 160 ppm, or less than about 150 ppm, or less than about 140 ppm, or less than about 130 ppm, or less than about 120 ppm, or less than about 110 ppm, or less than about 100 ppm, or less than about 90 ppm, or less than about 80 ppm based on the total amount of the calcium carbonate particulate material.

In one embodiment, the calcium carbonate particulate material comprises less than about 170 ppm of water soluble magnesium ions based on the total amount of the calcium carbonate particulate material. In another embodiment, the calcium carbonate particulate material comprises less than about 120 ppm of water soluble magnesium ions based on the total amount of the calcium carbonate particulate material. In yet another embodiment, the calcium carbonate particulate material comprises less than about 80 ppm of water soluble magnesium ions based on the total amount of the calcium carbonate particulate material.

The solubility of some magnesium salts (in g/100 ml) is provided in the following table:

Table 1:

| Substance | Formula | 20°C | Different temperature |
|---|---|---|---|
| Magnesium acetate | $Mg(C_2H_3O_2)_2$ | 53.4 | |
| Magnesium benzoate | $Mg(C_7H_5O_2)_2 \cdot H_2O$ | | 5 (40°C) |
| Magnesium bromate | $Mg(BrO_3)_2.6\ H_2O$ | | 58 (40°C) |
| Magnesium bromide | $MgBr_2$ | 101 | |
| Magnesium carbonate | $MgCO_3$ | 0.039 | |
| Magnesium chlorate | $Mg(ClO_3)_2$ | 135 | |
| Magnesium chloride | $MgCl_2$ | 54.6 | |
| Magnesium chromate | $MgCrO_4 \cdot 7\ H_2O$ | 137 | |
| Magnesium fluoride | $MgF_2$ | 0.007325 | |
| Magnesium fluorosilicate | $MgSiF_6$ | 30.8 | |
| Magnesium formate | $Mg(HCO_2)_2$ | 14.4 | |
| Magnesium hydroxide | $Mg(OH)_2$ | $9.628 \times 10^{-4}$ | |
| Magnesium iodate | $Mg(IO_3)_2$ | 8.6 | |
| Magnesium iodide | $MgI_2$ | 140 | |
| Magnesium molybdate | $MgMoO4$ | 13.7 | |
| Magnesium nitrate | $Mg(NO_3)_2$ | 69.5 | |
| Magnesium oxalate | $MgC_2O_4$ | 0.104 | |
| Magnesium perchlorate | $Mg(ClO_4)_2$ | 49.6 | |
| Magnesium phosphate | $Mg_3(PO_4)_2$ | $2.588 \times 10^{-4}$ | |
| Magnesium selenate | $MqSeO_4$ | 38.3 | |
| Magnesium selenite | $MgSeO_3$ | 0.05454 | |
| Magnesium sulfate | $MgSO_4$ | 35.1 | |
| Magnesium sulfite | $MgSO_3 \cdot 6\ H_2O$ | | 0.52 (25°C) |
| Magnesium thiosulfate | $MgS_2O_3$ | 50 | |

The calcium carbonate particulate material may be obtained from any source, for example, ground calcium carbonate (GCC), precipitated calcium carbonate (PCC) or combinations thereof.

The calcium carbonate particulate material used in the present disclosure may be ground calcium carbonate (GCC) usually obtained from a natural source by grinding. Ground calcium carbonate (GCC) is typically obtained by crushing and then grinding a mineral source such as chalk, marble or limestone, which may be followed by a particle size classification step, in order to obtain a product having the desired degree of fineness. Other techniques such as bleaching, flotation and magnetic separation may also be used to obtain a product having the desired degree of fineness and/or colour. The particulate solid material may be ground autogenously, *i.e.*, by attrition between the particles of the solid material themselves, or, alternatively, in the presence of a particulate grinding medium comprising particles of a different material from the calcium carbonate to be ground. Generally, these processes may be carried out with or without the presence of a dispersant, which may be added at any stage of the process.

Precipitated calcium carbonate (PCC) may also be used as the source of the calcium carbonate particulate material in the present disclosure, and may be produced by any of the known methods available in the art. TAPPI Monograph Series No 30, "Paper Coating Pigments", pages 34-35 describes the three main commercial processes for preparing precipitated calcium carbonate which may be used in the practice of the present disclosure. In all three processes, a calcium carbonate feed material, such as limestone, is first calcined to produce quicklime, and the quicklime is then slaked in water to yield calcium hydroxide or milk of lime. In the first process, the milk of lime is directly carbonated with carbon dioxide gas. This process has the advantage that no by-product is formed, and it is relatively easy to control the properties and purity of the calcium carbonate product. In the second process the milk of lime is contacted with soda ash to produce, by double decomposition, a precipitate of calcium carbonate and a solution of sodium hydroxide. The sodium hydroxide may be substantially completely separated from the calcium carbonate if this process is used commercially. In the third main commercial process the milk of lime is first contacted with ammonium chloride to give a calcium chloride solution and ammonia gas. The calcium chloride solution is then contacted with soda ash to produce by double decomposition precipitated calcium carbonate and a solution of sodium chloride. The crystals can be produced in a variety of different shapes and sizes, depending on the specific reaction process that is used. The three main forms of PCC crystals are aragonite, rhombohedral and scalenohedral, all of which are suitable for use in the present disclosure, including mixtures thereof.

In one embodiment, the calcium carbonate particulate material comprises ground calcium carbonate (GCC), for example comprises at least about 85 wt.% GCC, or at least about 95 wt.% GCC, or at least about 98 wt.% GCC based on the total weight of the calcium carbonate particulate material, or the calcium carbonate particulate material essentially consist of GCC, for example, the calcium carbonate particulate material is GCC.

In another embodiment, the calcium carbonate particulate material comprises precipitated calcium carbonate (PCC), for example comprises at least about 85 wt.% PCC, or at least about 95 wt.% PCC, or at least about 98 wt.% PCC based on the total weight of the calcium carbonate particulate material, or the calcium carbonate particulate material may essentially consist of PCC for example, the calcium carbonate particulate material is PCC. This embodiment is preferred.

In some embodiments, the calcium carbonate particulate material has a relatively high purity, for example, the calcium carbonate particulate material comprises calcium carbonate in an amount of more than about 95 wt.%, for example, more than about 98 wt.%, based on the total weight of the calcium carbonate particulate material.

In an embodiment, the calcium carbonate particulate material has a $d_{50}$ particle size, determined by Sedigraph, of about 10 $\mu$m or less, for example, of about 8 $\mu$m or less, of about 6 $\mu$m or less, of about 4 $\mu$m or less, of about 3.0 $\mu$m or less, of about 2.5 $\mu$m or less, of about 2.0 $\mu$m, or of about less 1.5 $\mu$m.

It has been surprisingly found in the present disclosure that the total content of magnesium ions in the calcium carbonate particulate material, which includes water soluble magnesium ions and magnesium ions in the form of non-water soluble magnesium compounds or salts, is not decisive for the stability of paint compositions comprising the calcium carbonate particulate material according to the present disclosure. Instead, it has been found that solely the content of water soluble magnesium ions in the calcium carbonate particulate material is relevant for the stability of paint compositions comprising the calcium carbonate particulate material according to the present disclosure.

Furthermore, it has been found that water soluble magnesium ions in the calcium carbonate particulate material can be converted, partially or entirely, into magnesium ions in the form of non-water soluble magnesium compounds or salts. Thus, the content of water soluble magnesium ions of the calcium carbonate particulate material can be reduced below a level at which the stability of the paint is not negatively affected without the need to reduce the total magnesium content of the calcium carbonate particulate material. Hence, in certain embodiments, the ratio between the total magnesium content of the calcium carbonate particulate material and the content of water soluble magnesium ions of the calcium carbonate particulate material, as determined using the method described herein, is about 1.5 or more, for example, about 2.0 or more. In other words, the total magnesium content of the calcium carbonate particulate material encompasses magnesium compounds which are not dissolved in water according to the method described above.

In one embodiment, the calcium carbonate particulate material comprises precipitated calcium carbonate (PCC), for example, the calcium carbonate particulate material comprises at least about 85 wt.% PCC, or at least about 95 wt.% PCC, or at least about 98 wt.% PCC based on the total weight of the calcium carbonate particulate material, or the calcium carbonate particulate material essentially consists of PCC or the calcium carbonate particulate material is PCC and the calcium carbonate particulate material comprises less than about 200 ppm of water soluble magnesium ions based on the total amount of the calcium carbonate particulate material, for example, the calcium carbonate particulate material comprises less than about 170 ppm, or less than about 120 ppm, or less than about 110 ppm, or less than about 100 ppm, or less than about 90 ppm, or less than about 80 ppm of water soluble magnesium ions based on the total amount of the calcium carbonate particulate material.

In one embodiment, the calcium carbonate particulate material comprises precipitated calcium carbonate (PCC), for example comprises at least about 85 wt.% PCC, or at least about 95 wt.% PCC, or at least about 98 wt.% PCC based on the total weight of the calcium carbonate particulate material, or the calcium carbonate particulate material essentially consists of PCC or the calcium carbonate particulate material is PCC and the calcium carbonate particulate material comprises less than about 200 ppm of water soluble magnesium ions sourced from magnesium salts selected from

$MgCl_2$, $MgBr_2$, $MgI_2$, $MgSO_4$, $Mg(acetate)_2$, $Mg(ClO_3)_2$, $Mg(ClO_4)_2$, $Mg(BrO_3)_2$, $MgCr_2O_7$, $MgSiF_6$, $Mg(HCO_2)_2$, $Mg(IO_3)_2$, $MgMoO_4$, $MgS_2O_3$ and hydrates thereof, based on the total amount of the calcium carbonate particulate material, for example, the calcium carbonate particulate material comprises less than about 170 ppm, or less than about 120 ppm, or less than about 110 ppm, or less than about 100 ppm, or less than about 90 ppm, or less than about 80 ppm of magnesium ions based on the total amount of the calcium carbonate particulate material; as determined by the method described herein.

*Process*

The present disclosure further provides processes for preparing the calcium carbonate particulate material according to the first aspect.

In one embodiment, the process comprises:

- providing a calcium carbonate particulate material comprising 200 ppm or more of water soluble magnesium ions based on the total amount of calcium carbonate material, wherein the amount of water soluble magnesium ions is determined using the method described herein;
- heating the calcium carbonate particulate material to a temperature of between about 65°C and about 200°C for a duration of up to about 24 h.

Features of the calcium carbonate particulate material described herein are also features of the process according to the present disclosure.

In an embodiment, the calcium carbonate particulate material with a water soluble magnesium ions content of 200 ppm or more based on the total amount of calcium carbonate particulate material; as measured by the method described herein; is washed prior to heating.

In one embodiment, the washing may be carried out at a temperature of below about 40°C, for example between from about 5°C to about 40°C, or from about 10°C to about 35°C, or from about 15 to about 30°C.

In one embodiment, the washing may be carried out using water, for example distilled water or tap water, such as tap water.

In case the washing is carried out using water, in one embodiment, the weight ratio between calcium carbonate and the total volume of water used may be from about 1:500 to about 1:1, for example from about 1:250 to about 1:4, or from about 1:100 to about 1:9.

In one embodiment, only one washing step is performed between providing calcium carbonate particulate material and heating of the calcium carbonate particulate material. In another embodiment, only one washing step is performed during the process.

The heating of the calcium carbonate particulate material in the processes according to the present disclosure may be performed using an air-swept mill. Suitable air-swept mills are, for example, obtainable from Atritor Ltd., UK and their products are usually denoted Atritors. In an embodiment, the calcium carbonate particulate material is heated using an air-swept mill and the temperature of the material exiting the Atritor may be between about 65°C and about 220°C, for example between about 80°C and about 200°C, or between about 90°C and about 185°C, or between about 100°C and about 175°C, or between about 110°C and about 160°C, or between about 120°C and about 150°C, or between about 130°C to about 140°C. The duration of the heating step in case of heating using an air-swept mill may be up to about 10 sec, for example up to about 5.0 sec, or up to about 1.0 or up to about 0.1 sec.

In an embodiment, the calcium carbonate particulate material is heated by conventional heating, for example, the heating is conducted using an oven, a band dryer, a spray dryer, a CD dryer or the like, and the temperature may be between about 65°C and about 220°C, for example between about 90°C and about 210°C, or between about 110°C and about 200°C, or between about 120°C and about 190°C, or between about 130°C and about 180°C, or between about 140°C and about 170°C, or between about 150°C and about 160°C. In case the calcium carbonate particulate material is heated by conventional heating, for example, using an oven, the duration of heating may be between about 2.0h to about 24h, for example between about 6.0h and about 22h, or between about 12h and about 20h, or between about 14h and about 18h. In case the calcium carbonate particulate material is heated by using a band dryer, the duration of heating may be between about 0.2h and about 2.0h, or between about 0.5h and about 1.8h, or between about 0.7h and about 1.5h, or between about 0.9h and about 1.2h. In case the calcium carbonate particulate material is heated by a spray dryer or a CD dryer, the duration of heating may be between about 0.5 mins and about 10 minutes, or between about 1.0 mins and about 9.5 minutes, or between about 1.5 mins and about 9.0 mins, or between about 2.0 mins and about 7.0 mins, or between about 3.0 mins and about 5.0 mins. In the present disclosure, heating using an air-swept mill is not considered as "conventional heating".

In an embodiment, the calcium carbonate particulate material is heated by conventional heating, for example, the heating is conducted using an oven, a band dryer, a spray dryer, a CD dryer or the like, and the temperature, in °C, and the time, in hours, upon heating satisfies the following relationship:

$$\text{Temperature x time} > 850°C·h$$

In an embodiment, the calcium carbonate particulate material is washed prior to heating and the calcium carbonate particulate material is heated by conventional heating, for example, the heating is conducted using an oven, a band dryer, a spray dryer, a CD dryer or the like, and the temperature, in °C, and the time, in hours, upon heating satisfies the following relationship:

$$\text{Temperature x time} > 850°C·h$$

In an embodiment, the calcium carbonate particulate material is not washed prior to heating and the calcium carbonate particulate material is heated by conventional heating , for example, the heating is conducted using an oven, a band dryer, a spray dryer, a CD dryer or the like, and the temperature, in °C, and the time, in hours, upon heating satisfies the following relationship:

$$\text{Temperature x time} > 1250°C·h$$

In an embodiment, the heating is conducted using an oven and the temperature may be between about 65°C and about 200°C, for example between about 90°C and about 190°C, or between about 110°C and about 180°C, or between about 120°C and about 180°C, or between about 130°C and about 170°C, or between about 140°C and about 160°C and/or the duration of the heating may be between about 2.0h to about 24h, for example between about 6.0h and about 22h, or between about 12h and about 20h, or between about 14h and about 18h.
In an embodiment, the drying is conducted using an oven.

*Calcium carbonate particulate material obtainable by the process according to the present disclosure*

As already outlined above, the present disclosure is furthermore directed to a calcium carbonate particulate material obtainable by the processes according to the present disclosure. Features and embodiments of the calcium carbonate particulate material according to the present disclosure are also features and embodiments of the calcium carbonate particulate material obtainable by the processes according to the present disclosure.

*Paint composition*

The present disclosure is further directed to a paint composition comprising the calcium carbonate particulate material according to the present disclosure or the calcium carbonate particulate material obtainable by the processes according to the present disclosure. In the following, the "calcium carbonate particulate material according to the present disclosure" and the "calcium carbonate particulate material obtainable by the processes according to the present disclosure" are abbreviated by the term "calcium carbonate particulate material" for the sake of conciseness.
In an embodiment, the paint composition comprises from about 1.0 wt.% to about 60 wt.% of the calcium carbonate particulate material, based on the total weight of the paint composition, for example from about 5.0 wt.% to about 50 wt.%, or from about 10 wt. % to about 45 wt. %, or from about 15 wt.% to about 40 wt.%, or from about 20 wt.% to about 35 wt.% based on the total weight of the paint composition.
In an embodiment, the paint composition further comprises waterglass. The waterglass, if present, may be present in an amount of up to about 5.0 wt.%, based on the total weight of the paint composition, for example in an amount of from about 1.0 wt.% to about 4.5 wt.%, or in an amount of from about 2.0 wt.% to about 4.0 wt.%, or in an amount of from about 2.1 wt.% to about 3.5 wt.%, for example from about 2.1 wt.% to about 5.0 wt.%, or from about 2.1 wt.% to about 4.5 wt.%, or from about 2.1 wt.% to about 4.0 wt.%, or from about 2.1 wt.% to about 3.5 wt.%, or from about 2.1 wt.% to about 3.0 wt.% based on the total weight of the paint composition.
In the present disclosure, the amount of waterglass is given as active solids of waterglass, based on the total weight of the paint composition. Thus, for example, in case a waterglass solution containing 25 wt.% active solids is used, 8 wt.% of this solution is used to achieve an amount of waterglass of 2 wt.%.
In an embodiment, the paint composition according to the present disclosure is characterized by an increase in viscosity from T0 to T24, each determined after 1800s in step (3) of the viscosity measurement described herein of less than about 100 Pa·s.

In an embodiment, the paint composition according to the present disclosure is characterized by a viscosity determined at T24 and after 1800s in step (3) of the viscosity measurement described herein of less than about 120 Pa·s, for example less than about 105 Pa·s, or less than about 90 Pa·s, or less than about 75 Pa·s.

In an embodiment, the paint composition according to the present disclosure is characterized by a viscosity determined at T0 and after 1800s in step (3) of the viscosity measurement described herein of less than about 20 Pa s, for example less, less than about 18 Pa.s, or less than about 15 Pa·s, or less than about 12 Pa.s, or less than about 10 Pa.s, or less than about 8 Pa.s.

The paint composition according to the present disclosure may be characterized by a viscosity determined at T1 week and after 1800s in step (3) of the viscosity measurement described herein. A significant reduction in viscosity determined at T1 week as compared to T24 can be due to a decomposition of the paint composition. Many examples according to the present invention do not show such decomposition patterns.

In an embodiment, the paint composition further comprises a polymer, sometimes also referred to as "binder". Such polymers are film-forming components of paint, which impart adhesion and bind the pigments together. Thus, the polymer is any suitable material which is capable of binding the pigments together and providing adhesion to the substrate that is painted with the paint. The polymer may be a natural and/or synthetic resin such as, for example, latex-based polymers and copolymers based on acrylics and/or vinyls, polyurethanes, polyesters, melamine resins, epoxies, copolymers based on vinyl acetate, vinyl esters and ethylene, and/or oils and other suitable monomeric species. For oil-based paints, suitable binders include linseed oil, tung oil or alkyd resins.

The polymer may be used in solid form or in the form of a solution or dispersion in a solvent. In one embodiment, the binder is used as dispersion in a solvent, for example water. The solids content of such a dispersion, for example in water, may be from about 25 wt.% to about 75 wt.%, based on the total weight of the dispersion, for example from about 35 wt.% to about 65 wt.%, or from about 45 wt.% to about 55 wt.% based on the total weight of the paint composition.

In one embodiment, the amount of polymer solids present in the paint composition may be from about 2.0 wt.% to about 25 wt.%, based on the total weight of the paint composition, for example from about 3.0 wt.% to about 20 wt.%, or from about 4.0 wt.% to about 15 wt.%, or from about 5.0 wt.% to about 10 wt.% based on the total weight of the paint composition.

In an embodiment, the paint composition has a pH value of about 8.5 or above. The pH value of the paint composition may be below about 11.4. In an embodiment, the paint composition has a pH value of from about 8.5 to about 11.4, for example from about 9.5 to about 11.4, or from about 10.5 to about 11.4, or from about 11.0 to about 11.4.

The pH may be adjusted, if necessary, using bases conventional in the art of making paints, such as alkali metal hydroxides, ammonia and AMP (2-amino-2-methyl-1-propanol).

In an embodiment, the paint composition further comprises a base which may be selected from the group consisting of alkali metal hydroxides, ammonia and AMP (2-amino-2-methyl-1-propanol).

In an embodiment, the alkali metal hydroxides are selected from the group consisting of sodium hydroxide and potassium hydroxide. In an embodiment, the base is selected from the group consisting of sodium hydroxide, potassium hydroxide, ammonia and AMP (2-amino-2-methyl-1-propanol) and a combination thereof. The amount and concentration of the base is selected such that the desired pH value is obtained.

In an embodiment, the paint composition further comprises one or more pigment(s) and/or one or more filler(s). A pigment is that which provides the primary colouration of a paint, whether white or a colour shade. The term includes finely ground, natural or synthetic, inorganic or organic, insoluble dispersed particles which may be dispersed in a liquid vehicle, *i.e.*, solvent.

Suitable pigments include, for example, titanium dioxide, carbon black, calcium sulphate, iron oxide, and the copper-complex phthalo blue. Other suitable pigments for providing colour will be readily apparent to persons skilled in the art.

Suitable fillers include, for example, gypsum, a hydrous kandite clay such as kaolin, halloysite or ball clay, an anhydrous (calcined) kandite clay such as metakaolin or fully calcined kaolin, talc, mica, perlite, feldspars, nepheline syenite, wollastonite, diatomaceous earth, barite, glass, and natural or synthetic silica or silicates

In an embodiment, the one or more pigment(s) and one or more filler(s), if present, are different from calcium carbonate. In a further embodiment, the one or more pigment(s) and one or more filler(s), if present, are free of calcium carbonate.

In an embodiment, the one or more pigment(s) and one or more filler(s), if present, are present in an amount of from about 1.0 wt.% to about 50 wt.%, based on the total weight of the paint composition, for example from about 2.5 wt.% to about 40 wt.%, or from about 5.0 wt.% to about 30 wt.%, based on the total weight of the paint composition.

In an embodiment, the solids content of the paint composition, may be from about 25 wt.% to about 75 wt.%, for example from about 35 wt.% to about 65 wt.%, or from about 45 wt.% to about 55 wt.%, based on the total weight of the paint composition.

In principle, any solvent suitable for paint compositions may be used in the paint composition according to the present disclosure. In an embodiment, the paint composition is a water based composition and the water content of the paint composition may be from about 25 wt.% to about 75 wt.%, for example from about 35 wt.% to about 65 wt.%, or from about 45 wt.% to about 55 wt.%, based on the total weight of the paint composition.

In an embodiment, the paint composition is essentially free of organic biocides. In some examples, the paint composition is essentially free of organic biocides having a molecular weight of up to about 500 g/mol, for example, the paint composition is essentially free of organic biocides having a molecular weight of up to about 1000 g/mol, or the paint composition is essentially free of organic biocides having a molecular weight of up to about 2000 g/mol, or the paint composition is essentially free of organic biocides having any molecular weight. In this context "essentially free" denotes that the content of organic biocide detected from a paint composition sample using gas chromatography mass spectroscopy or liquid chromatography mass spectroscopy, is less than about 10 ppm based on the total weight of the paint composition, for example the content is less than about 5 ppm based on the total weight of the paint composition or less than about 2.5 ppm based on the total weight of the paint composition. Such small amounts of organic biocides may be present in the paint composition because some of the components used to prepare the paint composition cannot be stabilized otherwise. In one embodiment, organic biocides are not added to the paint composition as a separate excipient.

The exemplary paints disclosed herein may also include at least one additive chosen from conventional additives, such as, for example, surfactants, thickeners, defoamers wetting agents, dispersants, solvents, and coalescents, as well as other functional additives. Such additives are well-known in the art. In an embodiment, the total amount of conventional additives does not exceed about 10 wt.%, based on the total weight of the paint composition, for example, the total amount of conventional additives is within the range of from about 0.10 wt.% to about 7.5 wt.%, or from about 0.25 wt.% to about 5.0 wt.% or from about 0.50 wt.% to about 2.5 wt.%, based on the total weight of the paint composition. In case solution of these additives are used, the above amounts pertain to the additive as such without the solvent.

In an embodiment, the paint composition comprises, based on the total weight of the paint composition:

- from about 1.0 wt.% to about 60 wt.% of the calcium carbonate particulate material, for example, from about 5.0 wt.% to about 50 wt.%, or from about 10 wt.% to about 45 wt.%, or from about 15 wt.% to about 40 wt.%, or from about 20 wt.% to about 35 wt.%;
- waterglass, in an amount of up to about 5.0 wt.%, for example in an amount of from about 1.0 wt.% to about 4.5 wt.%, or in an amount of from about 2.0 wt.% to about 4.0 wt.%, or in an amount of from about 2.1 wt.% to about 3.5 wt.%, for example from about 2.1 wt.% to about 5.0 wt.%, or from about 2.1 wt.% to about 4.5 wt.%, or from about 2.1 wt.% to about 4.0 wt.%, or from about 2.1 wt.% to about 3.5 wt.%, or from about 2.1 wt.% to about 3.0 wt.%;
- a polymer, wherein the amount of polymer solids present in the paint composition may be from about 2.0 wt.% to about 25 wt.%, for example from about 3.0 wt.% to about 20 wt.%, or from about 4.0 wt.% to about 15 wt.%, or from about 5.0 wt.% to about 10 wt.%;
- optionally, one or more pigment(s) and one or more filler(s), different from calcium carbonate, in an amount of from about 1.0 wt.% to about 50 wt.%, for example from about 2.5 wt.% to about 40 wt.%, or from about 5.0 wt.% to about 30 wt.%;
- optionally, conventional additives in an amount which does not exceed about 10 wt.%, or the total amount of conventional additives is within the range of from about 0.10 wt.% to about 7.5 wt.%, for example from about 0.25 wt.% to about 5.0 wt.%, or from about 0.50 wt.% to about 2.5 wt.%;
- water to add up to 100 wt.%;
wherein the paint composition has a pH value of from about 8.5 to about 11.4, for example from about 9.5 to about 11.4, or from about 10 to about 11.4, or from about 11.0 to about 11.4 and
the calcium carbonate particulate material comprises precipitated calcium carbonate (PCC), for example, comprises at least about 85 wt.% PCC, or at least about 95 wt.% PCC, or at least 98 wt.%, or at least about 99 wt.% PCC based on the total weight of the calcium carbonate particulate material, or the calcium carbonate particulate material essentially consists of PCC, for example, the calcium carbonate particulate material is PCC.

For the avoidance of doubt, the present application is directed to subject-matter described in the following numbered paragraphs.

1. A calcium carbonate particulate material comprising less than about 200 ppm of water soluble magnesium ions based on the total amount of the calcium carbonate particulate material, wherein the amount of water soluble magnesium ions is determined using the method described herein.

2. The calcium carbonate particulate material according to numbered paragraph 1, comprising less than about 170 ppm of water soluble magnesium ions based on the total amount of the calcium carbonate particulate material, wherein the amount of water soluble magnesium ions is determined using the method described herein.

3. The calcium carbonate particulate material according to numbered paragraph 2, comprising less than about 120 ppm of water soluble magnesium ions based on the total amount of the calcium carbonate particulate material, wherein the amount of water soluble magnesium ions is determined using the method described herein.

4. A calcium carbonate particulate material according to numbered paragraph 3, wherein the water soluble magnesium ions are sourced from one or more magnesium salt(s).

5. A calcium carbonate particulate material according to numbered paragraph 4, wherein the one or more water soluble magnesium salt(s) are selected from $MgCl_2$, $MgBr_2$, $MgI_2$, $MgSO_4$, $Mg(acetate)_2$, $Mg(ClO_3)_2$, $Mg(ClO_4)_2$, $Mg(BrO_3)_2$, $MgCr_2O_7$, $MgSiF_6$, $Mg(HCO_2)_2$, $Mg(IO_3)_2$, $MgMoO_4$, $MgS_2O_3$ and hydrates thereof, based on the total amount of the calcium carbonate particulate material.

6. The calcium carbonate particulate material according to any one of the preceding numbered paragraphs, wherein the calcium carbonate particulate material is ground calcium carbonate, precipitated calcium carbonate or combinations thereof.

7. The calcium carbonate particulate material according to any one of the preceding numbered paragraphs, wherein the calcium carbonate particulate material is precipitated calcium carbonate.

8. The calcium carbonate particulate material according to any one of the preceding numbered paragraphs, comprising calcium carbonate in an amount of more than about 95 wt.% based on the total weight of the calcium carbonate particulate material.

9. The calcium carbonate particulate material according to any one of the preceding numbered paragraphs having a $d_{50}$ particle size of about 3.0 $\mu$m or less, as measured by sedimentation using a Sedigraph.

10. A method for preparing a calcium carbonate particulate material according to any one of numbered paragraphs 1 to 9, comprising:

- providing a calcium carbonate particulate material comprising about 200 ppm or more of water soluble magnesium ions based on the total amount of calcium carbonate material, wherein the amount of water soluble magnesium ions is determined using the method described herein;

- heating the calcium carbonate particulate material to a temperature of between about 65°C and about 200°C for a duration of up to about 24 h.

11. The method according to numbered paragraph 10, wherein the calcium carbonate particulate material is washed prior to heating.

12. The method according to numbered paragraph 11, wherein the washing is carried out using water and at a temperature of 25°C.

13. The method according to any one of numbered paragraphs 10 to 12, wherein the temperature, in °C, and the time, in hours, upon heating satisfies the following relationship:

$$\text{Temperature} \times \text{time} > 850°C \cdot h$$

14. A calcium carbonate particulate material obtainable by the process according to any one of numbered paragraphs 10 to 13.

15. A paint composition comprising the calcium carbonate particulate material according to any one of numbered paragraphs 1 to 9, or numbered paragraph 14.

16. The paint composition according to numbered paragraph 15, further comprising waterglass.

17. The paint composition according to numbered paragraph 16, wherein the waterglass is present in an amount of up to about 5.0 wt.%, based on the total weight of the paint composition.

18. The paint composition according to any one of numbered paragraphs 15 to 17, having a pH value of about 8.5 or above.

19. The paint composition according to any one of numbered paragraphs 15 to 18, further comprising a polymer.

20. The paint composition according to any one of numbered paragraphs 18 to 22, further comprising a base.

21. The paint composition according to numbered paragraph 20, wherein the base is selected from the group consisting of alkali metal hydroxides, ammonia, AMP (2-amino-2-methyl-1-propanol) and a combination thereof.

22. The paint composition according to numbered paragraph 21, wherein the alkali metal hydroxides are selected from the group consisting of sodium hydroxide and potassium hydroxide.

23. The paint composition according to any one of numbered paragraphs 15 to 22, further comprising one or more pigment(s) and/or one or more filler(s).

24. The paint composition according to any one of numbered paragraphs 15 to 23, which is a water based composition.

25. The paint composition according to any one of numbered paragraphs 15 to 26, which is essentially free from organic biocides.

26. The paint composition according to numbered paragraph 25, wherein the organic biocides have a molecular weight of up to about 500 g/mol.

EXAMPLES

Materials:

- Tylose MH 30000 YP4, a water soluble, non-ionic, methyl hydroxyethyl cellulose thickener, obtainable from SE Tylose GmbH & Co. KG;
- Lopon 890, a dispersing agent, obtainable from ICL Advanced Additives;
- Ammonia having a concentration of 28 wt.%;
- Agitan 218, a defoamer for aqueous emulsions, obtainable from Munzing Chemie
- Mowilith LDM 1828, an aqueous copolymer dispersion based on vinyl acetate, vinyl esters and ethylene, obtainable from Celanese Emulsion Polymers (solids content about 50 wt.%);
- Trasol KE-K, potassium silicate (waterglass), containing 28 wt.% active solids, obtainable from BASF;
- Test material, is the calcium carbonate particulate material specified in the respective example;
- $MgCl_2 \cdot 6\ H_2O$;
- $Mg(OH)_2$;

Tylose MH 30000 YP4 thickener was made into a 2% solution 24h before paint makedown.

Makedown method following order of addition listed in table 2:

- All components listed alongside 'order of addition #1' are weighed into a high speed mixer pot having a volume of 40 ml.
- The pot is then mixed for one minute at 3000 rpm using a SpeedMixer™ model DAC 150.1 FVZ. A palette knife is used to scrape powder from the edges of the pot and to break up any large agglomerates as usual in the art;
- The mixing is then continued for two minutes at 3000 rpm and scraped with a palette knife again;
- A final three minute mix at 3000 rpm completes the mill base dispersion.
- Components listed alongside order #2 are weighed into the pot, and then mixed for one minute at 2000 rpm;
- Thereafter, the compound alongside order #3 is weighed into the pot, and then mixed for one minute at 2000 rpm;
- Finally, the component alongside order #4 is weighed into the pot and the paint is given a final mix for two minutes at 2000 rpm;

Table 2:

| Test formulation<br>Raw materials | [g] | Order of addition |
|---|---|---|
| **Mill base** | | |
| Test material | 15.00 | #1 |
| Water | 2.56 | |
| Tylose MH 30000 YP4 (2% solution) | 7.50 | |
| Lopon 890 | 0.25 | |
| Ammonia | 0.08 | |
| Agitan 218 | 0.20 | |
| **Let down** | | |
| Water (let down) | 5.66 | #2 |
| Tylose MH 30000 YP4 (2% solution) | 7.50 | |
| Mowilith LDM 1828 | 7.50 | #3 |
| Trasol KE-K | 3.75 | #4 |
| Total | 50.00 | |

Table 3:

| Properties | |
|---|---|
| Theoretical solids [wt.%] | 40.9 |
| Mill base actual solids (calculated with real weight of water) [wt.%] | 58.6 |
| PVC [%] | 61.6 |
| Theoretical density [g/ml] | 1.27 |

**Example 1:**

In this example, ImeXtend 90, a GCC material obtainable from Imerys has been used as the Test material. Furthermore, to test the influence of water soluble and water not soluble magnesium present in the paint composition, $MgCl_2.6H_2O$ or $Mg(OH)_2$ have been included into the paint compositions by replacing the 5.66 grams of water used in the Let down according to table 2 by aqueous solutions containing the appropriate amount of $MgCl_2.6H_2O$ and $Mg(OH)_2$, respectively, to achieve the target amount (in ppm) of magnesium indicated in tables 4 (addition of $MgCl_2.6H_2O$) and 5 (addition of $Mg(OH)_2$) below. In each of tables 4 and 5, the viscosity values after step (2) of the viscosity measurement described herein ("30s @ 30 shear") and during step (3) ("@ 0.1 shear") after 5, 30, 60, 120, 900 and 1800 seconds are shown. Furthermore, the measurement is carried out straight after the paint composition is prepared (T0), after 24 hours (T24), 48 hours (T48), 1 week (T1 week) and 2 weeks (T2 week) (for $MgCl_2.6H_2O$).

Table 4 (addition of $MCl_2.6H_2O$:

| Time | Target amount of Mg | Viscosity (Pa.s) 30s @ 30 shear | Viscosity (Pa.s) @ 0.1 shear | | | | | | | |
|------|------|------|------|------|------|------|------|------|------|------|
| | | | 5s | 30s | 60s | 120s | 900s | 1800s | % change over 30mins | % change vs no addition @ 30mins |
| T0 | No addition | 1.2 | 12 | 17 | 19 | 19 | 18 | 18 | 49 | - |
| | 40 ppm | 1.3 | 13 | 17 | 20 | 20 | 19 | 19 | 50 | 5 |
| | 80 ppm | 1.3 | 13 | 17 | 19 | 20 | 19 | 19 | 51 | 5 |
| | 100 ppm | 1.3 | 13 | 18 | 20 | 20 | 20 | 20 | 52 | 8 |
| | 200 ppm | 1.3 | 13 | 18 | 20 | 21 | 21 | 21 | 58 | 16 |
| | 1000 ppm | 2.4 | 35 | 74 | 102 | 120 | 174 | 246 | 600 | 1259 |
| T24 | No addition | 1.7 | 17 | 22 | 23 | 24 | 33 | 40 | 143 | - |
| | 40 ppm | 1.9 | 19 | 25 | 27 | 30 | 53 | 61 | 218 | 51 |
| | 80 ppm | 2.2 | 26 | 40 | 51 | 68 | 96 | 100 | 282 | 148 |
| | 100 ppm | 2.4 | 30 | 54 | 73 | 91 | 114 | 118 | 287 | 192 |
| | 200 ppm | 3.3 | 82 | 159 | 175 | 184 | 189 | 186 | 127 | 363 |
| | 1000 ppm | 7.1 | 131 | 415 | 442 | 463 | 468 | 457 | 248 | 1034 |
| T48 | No addition | 2.0 | 20 | 28 | 32 | 40 | 68 | 72 | 262 | - |
| | 40 ppm | 2.3 | 29 | 53 | 72 | 90 | 109 | 111 | 280 | 53 |
| | 80 ppm | 2.8 | 55 | 120 | 127 | 136 | 149 | 151 | 177 | 109 |
| | 100 ppm | 3.0 | 70 | 142 | 156 | 164 | 171 | 171 | 145 | 135 |
| | 200 ppm | 3.3 | 78 | 153 | 165 | 171 | 173 | 170 | 119 | 135 |
| | 1000 ppm | 6.1 | 132 | 272 | 292 | 304 | 314 | 313 | 138 | 332 |
| T1 week | No addition | 2.6 | 43 | 103 | 119 | 127 | 134 | 133 | 212 | - |
| | 40 ppm | 2.9 | 65 | 136 | 148 | 155 | 161 | 160 | 148 | 21 |
| | 80 ppm | 3.1 | 74 | 145 | 157 | 162 | 165 | 164 | 121 | 24 |
| | 100 ppm | 2.9 | 64 | 123 | 133 | 138 | 143 | 143 | 123 | 8 |
| | 200 ppm | 2.9 | 48 | 95 | 104 | 107 | 108 | 107 | 121 | -19 |
| | 1000 ppm | 5.1 | 97 | 189 | 203 | 211 | 218 | 217 | 125 | 64 |

(continued)

| Time | Target amount of Mg | Viscosity (Pa.s) 30s @ 30 shear | Viscosity (Pa.s) @ 0.1 shear | | | | | | | |
|------|------|------|------|------|------|------|------|------|------|------|
| | | | 5s | 30s | 60s | 120s | 900s | 1800s | % change over 30mins | % change vs no addition @ 30mins |
| T2 week | No addition | 2.5 | 41 | 99 | 114 | 121 | 125 | 125 | 203 | - |
| | 40 ppm | 2.6 | 47 | 108 | 120 | 126 | 128 | 127 | 173 | 2 |
| | 80 ppm | 2.8 | 51 | 108 | 118 | 123 | 126 | 126 | 144 | 1 |
| | 100 ppm | 2.7 | 47 | 102 | 112 | 116 | 119 | 118 | 151 | -5 |
| | 200 ppm | 2.8 | 41 | 80 | 88 | 91 | 92 | 91 | 125 | -27 |
| | 1000 ppm | 4,8 | 88 | 162 | 178 | 185 | 191 | 190 | 116 | 53 |

Table 5 (addition of $Mg(OH)_2$):

| Time | Target amount of Mg | Viscosity (Pa.s) 30s @ 30 shear | Viscosity (Pa.s) @ 0.1 shear | | | | | | | |
|------|------|------|------|------|------|------|------|------|------|------|
| | | | 5s | 30s | 60s | 120s | 900s | 1800s | % change over 30mins | % change vs no addition @ 30mins |
| T0 | No addition | 1.2 | 12 | 17 | 19 | 19 | 18 | 18 | 49 | - |
| | 40 ppm | 1.3 | 13 | 18 | 20 | 21 | 20 | 20 | 45 | 8 |
| | 80 ppm | 1.3 | 13 | 18 | 20 | 21 | 20 | 19 | 47 | 7 |
| | 100 ppm | 1.3 | 13 | 18 | 20 | 20 | 20 | 19 | 46 | 6 |
| | 200 ppm | 1.3 | 13 | 18 | 20 | 21 | 20 | 19 | 46 | 6 |
| | 1000 ppm | 1.3 | 13 | 18 | 20 | 21 | 20 | 20 | 47 | 9 |
| T24 | No addition | 1.7 | 17 | 22 | 23 | 24 | 33 | 40 | 143 | - |
| | 40 ppm | 1.8 | 18 | 23 | 24 | 26 | 38 | 45 | 157 | 13 |
| | 80 ppm | 1.8 | 18 | 24 | 25 | 26 | 37 | 44 | 145 | 9 |
| | 100 ppm | 1.8 | 18 | 24 | 25 | 26 | 37 | 44 | 138 | 9 |
| | 200 ppm | 1.8 | 19 | 25 | 26 | 28 | 43 | 50 | 168 | 25 |
| | 1000 ppm | 1.8 | 19 | 25 | 26 | 28 | 42 | 50 | 165 | 23 |
| T48 | No addition | 2.0 | 20 | 28 | 32 | 40 | 68 | 72 | 262 | - |
| | 40 ppm | 2.1 | 22 | 32 | 38 | 49 | 74 | 77 | 247 | 7 |
| | 80 ppm | 2.1 | 22 | 31 | 36 | 46 | 74 | 78 | 246 | 7 |
| | 100 ppm | 2.1 | 23 | 33 | 39 | 50 | 77 | 81 | 247 | 12 |
| | 200 ppm | 2.0 | 22 | 33 | 42 | 55 | 78 | 81 | 261 | 11 |
| | 1000 ppm | 2.2 | 25 | 38 | 47 | 62 | 88 | 91 | 263 | 26 |

(continued)

| Time | Target amount of Mg | Viscosity (Pa.s) 30s @ 30 shear | Viscosity (Pa.s) @ 0.1 shear | | | | | | | |
|---|---|---|---|---|---|---|---|---|---|---|
| | | | 5s | 30s | 60s | 120s | 900s | 1800s | % change over 30mins | % change vs no addition @ 30mins |
| T1 week | No addition | 2.6 | 43 | 103 | 119 | 127 | 134 | 133 | 212 | - |
| | 40 ppm | 2.7 | 46 | 108 | 125 | 133 | 139 | 137 | 200 | 4 |
| | 80 ppm | 2.7 | 46 | 108 | 120 | 128 | 136 | 135 | 194 | 2 |
| | 100 ppm | 2.7 | 47 | 110 | 126 | 134 | 139 | 138 | 190 | 4 |
| | 200 ppm | 2.7 | 51 | 116 | 127 | 134 | 141 | 140 | 174 | 5 |
| | 1000 ppm | 2.8 | 52 | 120 | 132 | 139 | 145 | 143 | 173 | 8 |

As demonstrated by the results provided in table 4 above, the addition of a water soluble magnesium salt ($MgCl_2.6H_2O$) to the paint results in an increased viscosity by increasing the content of water soluble magnesium ions. A decrease in the viscosity after 2 days is observed for the paint composition having the target amount of water soluble magnesium ions of 200 ppm and 1000 pm, see c.f. T48 vs T1 week. Without wishing to be bound by theory, it is assumed that the paint becomes unstable and the structure of the paint composition is starting to break down.

However, as demonstrated by table 5, even a paint composition with a target amount of 1000 ppm magnesium by addition of $Mg(OH)_2$ does not show a significant increase of viscosity versus the paint containing only ImeXtend 90 ("no addition"). This is explained by the fact that magnesium hydroxide is practically insoluble in water (the solubility of $Mg(OH)_2$ in water is only $9.628 \times 10^{-4}$ g/100 ml). Therefore, the addition of $Mg(OH)_2$ does not significantly increase the overall amount of water soluble magnesium ions as the magnesium stays in the form of magnesium hydroxide.

These results show that the total content of magnesium ions, irrespective whether they are water soluble or not, is not decisive for the stability of the paint, but only the content of water soluble magnesium ions effects the stability of the paint.

**Example 2:**

In this example, Socal P2, a precipitated calcium carbonate, obtainable by Imerys, which has optionally been pre-treated, has been used as the Test material in the formulation according to table 2. No addition of magnesium ions took place in example 2.

In particular, Socal P2 has been pre-treated as follows:

Sample 2A: no pre-treatment, *i.e.*, Socal P2 has been used as such, the content of water soluble magnesium ions was 170 ppm;

Sample 2B: Socal P2 from production under slurry has been washed at room temperature using tap water in a calcium carbonate slurry:water volume ratio of about 1.5:10 for 500s and subsequently dried in an oven at 150°C for 16 h, the content of water soluble magnesium ions was 9 ppm;

Sample 2C: Socal P2 has been dried in an oven at 150°C for 16 h without prior washing, the content of water soluble magnesium ions was 72 ppm;

Sample 2D: Socal P2 has been washed as in case of sample 2B but instead of oven drying, the drying was performed using an Atritor with an exit temperature of 130°C and a drying time of about a few seconds or less was applied, the content of water soluble magnesium ions was 53 ppm;

Sample 2E: Socal P2 has been dried using an Atritor with an exit temperature of 130°C and a drying time of about a few seconds or less was applied without prior washing, the content of water soluble magnesium ions was 171 ppm;

In table 6 below, the viscosity values after step (2) of the viscosity measurement described herein ("30s @ 30 shear") and during step (3) ("@ 0.1 shear") after 5, 30, 60, 120, 900 and 1800 seconds are shown. Furthermore, the measurement is carried out straight after the paint composition is prepared (T0), after 24 hours (T24), 48 hours (T48) and 1 week (T1 week).

Table 6:

| Time | Sample | Viscosity (Pa.s) 30s @ 30 shear | Viscosity (Pa.s) @ 0.1 shear | | | | | | | |
|---|---|---|---|---|---|---|---|---|---|---|
| | | | 5s | 30s | 60s | 120s | 900s | 1800s | % change over 30mins | % change vs non washed sample @ 30mins |
| T0 | 2A | 1.5 | 13 | 17 | 18 | 18 | 18 | 20 | 55 | - |
| | 2B | 1.4 | 9 | 13 | 13 | 13 | 13 | 12 | 37 | -10 |
| | 2C | 1.4 | 10 | 13 | 14 | 14 | 14 | 14 | 44 | - |
| | 2D | 1.5 | 12 | 15 | 16 | 16 | 16 | 16 | 37 | -26 |
| | 2E | 1.5 | 13 | 17 | 18 | 18 | 19 | 22 | 69 | - |
| T24 | 2A | 3.2 | 73 | 125 | 133 | 141 | 150 | 149 | 103 | - |
| | 2B | 1.4 | 8 | 12 | 12 | 13 | 14 | 15 | 81 | -72 |
| | 2C | 1.7 | 13 | 23 | 31 | 41 | 53 | 54 | 310 | - |
| | 2D | 2.0 | 18 | 28 | 37 | 49 | 66 | 67 | 277 | -68 |
| | 2E | 3.3 | 90 | 179 | 194 | 204 | 211 | 211 | 133 | - |
| T48 | 2A | 3.2 | 64 | 116 | 124 | 129 | 132 | 131 | 104 | - |
| | 2B | 1.5 | 9 | 13 | 14 | 15 | 20 | 22 | 138 | -81 |
| | 2C | 2.4 | 37 | 91 | 104 | 111 | 117 | 116 | 211 | - |
| | 2D | 2.5 | 36 | 84 | 103 | 111 | 118 | 119 | 230 | -45 |
| | 2E | 3.7 | 96 | 203 | 217 | 223 | 221 | 215 | 123 | - |
| T1 week | 2A | 2.9 | 44 | 83 | 90 | 93 | 93 | 92 | 109 | - |
| | 2B | 1.7 | 13 | 24 | 33 | 44 | 53 | 53 | 309 | -56 |
| | 2C | 2.7 | 54 | 109 | 118 | 123 | 123 | 121 | 124 | - |
| | 2D | 3.1 | 70 | 135 | 145 | 150 | 150 | 147 | 111 | 3 |
| | 2E | 3.2 | 70 | 135 | 144 | 147 | 145 | 143 | 103 | - |

As seen by samples 2B and 2D, washing reduces the content of water soluble magnesium ions in Socal P2, leading to an improved viscosity shown by table 6 above. Furthermore, sample 2C, which has not been subjected to a washing step, but to an oven drying step alone shows a significantly reduced amount of water soluble magnesium ions and also improved viscosity results compared with the untreated Socal P2 (sample 2A). Without wishing to be bound by theory, it is assumed that some of the water soluble magnesium ions are converted into a water insoluble form by the over drying and, this resulting water insoluble form of the magnesium ions does no longer affect the viscosity of the paint composition.

### Example 3:

In this example, Socal P2, which has already been used in Example 2, has been used as the Test material in the formulation according to table 2. No addition of magnesium ions took place in example 3.
Except for the reference material, *i.e.,* neat Socal P2 (sample 3A), in samples 3B to 3E, Socal P2 has been washed at room temperature using tap water in a calcium carbonate slurry:water volume ratio of 1.5:10 for 500s and has subsequently dried in an oven, whereby the drying times and temperature were as follows:

Sample 3B: 80°C for 16h, the content of water soluble magnesium ions was 66 ppm;
Sample 3C: 105°C for 16h, the content of water soluble magnesium ions was 61 ppm;
Sample 3D: 150°C for 16h, the content of water soluble magnesium ions was 30 ppm;

Sample 3E: 150°C for 6h, the content of water soluble magnesium ions was 48 ppm;

In table 7 below, the viscosity values after step (2) of the viscosity measurement described herein ("30s @ 30 shear") and during step (3) ("@ 0.1 shear") after 5, 30, 60, 120, 900 and 1800 seconds are shown. Furthermore, the measurement is carried out straight after the paint composition is prepared (T0), after 24 hours (T24), 48 hours (T48) and 1 week (T1 week).

Table 7:

| Time | Sample | Viscosity (Pa.s) 30s @ 30 shear | Viscosity (Pa.s) @ 0.1 shear | | | | | | % change over 30mins | % change vs Socal P2 @ 30mins | % change vs. T0 |
|---|---|---|---|---|---|---|---|---|---|---|---|
| | | | 5s | 30s | 60s | 120s | 900s | 1800s | | | |
| T0 | 3A | 1.5 | 13 | 17 | 18 | 18 | 18 | 20 | 55 | - | - |
| | 3B | 1.4 | 9 | 13 | 14 | 14 | 13 | 13 | 42 | -33 | - |
| | 3C | 1.4 | 9 | 12 | 13 | 13 | 13 | 13 | 42 | -36 | - |
| | 3D | 1.4 | 9 | 12 | 13 | 13 | 13 | 12 | 42 | -38 | - |
| | 3E | 1.4 | 8 | 12 | 12 | 13 | 12 | 12 | 44 | -40 | - |
| T24 | 3A | 3.2 | 73 | 125 | 133 | 141 | 150 | 149 | 103 | - | 655 |
| | 3B | 1.7 | 12 | 18 | 22 | 28 | 42 | 43 | 255 | -71 | 221 |
| | 3C | 1.6 | 10 | 15 | 17 | 19 | 29 | 31 | 200 | -79 | 145 |
| | 3D | 1.5 | 9 | 13 | 14 | 15 | 19 | 21 | 126 | -86 | 68 |
| | 3E | 1.5 | 9 | 13 | 14 | 15 | 20 | 22 | 132 | -85 | 83 |
| T48 | 3A | 3.2 | 64 | 116 | 124 | 129 | 132 | 131 | 104 | - | 562 |
| | 3B | 2.0 | 20 | 43 | 58 | 69 | 79 | 79 | 297 | -40 | 491 |
| | 3C | 1.7 | 13 | 21 | 28 | 36 | 49 | 50 | 289 | -62 | 294 |
| | 3D | 1.6 | 10 | 15 | 17 | 20 | 29 | 31 | 195 | -77 | 148 |
| | 3E | 1.6 | 11 | 16 | 19 | 23 | 34 | 36 | 238 | -73 | 201 |
| T1 week | 3A | 2.9 | 44 | 83 | 90 | 93 | 93 | 92 | 109 | - | 368 |
| | 3B | 2.7 | 48 | 103 | 112 | 116 | 116 | 113 | 133 | 22 | 749 |
| | 3C | 2.4 | 37 | 82 | 92 | 97 | 98 | 95 | 159 | 3 | 656 |
| | 3D | 2.0 | 23 | 55 | 68 | 74 | 78 | 77 | 231 | -17 | 525 |
| | 3E | 2.2 | 30 | 69 | 79 | 84 | 85 | 83 | 178 | -10 | 606 |

The results shown in table 7 demonstrate that, even after washing, the content of water soluble magnesium ions can be further reduced by drying. As already discussed for example 2 above, without wishing to be bound by theory, it is assumed that some of the water soluble magnesium ions are converted into a water insoluble form by drying and, this resulting water insoluble form of the magnesium ions does no longer affect the viscosity of the paint composition.

**Claims**

1. A calcium carbonate particulate material comprising less than about 200 ppm of water soluble magnesium ions based on the total amount of the calcium carbonate particulate material, wherein the amount of water soluble magnesium ions is determined using the method described herein.

2. A calcium carbonate particulate material according to claim 1, wherein the water soluble magnesium ions are sourced from one or more magnesium compounds or salt(s).

3. A calcium carbonate particulate material according to claim 2 wherein the one or more water soluble magnesium salt(s) are selected from $MgCl_2$, $MgBr_2$, $MgI_2$, $MgSO_4$, $Mg(acetate)_2$, $Mg(ClO_3)_2$, $Mg(ClO_4)_2$, $Mg(BrO_3)_2$, $MgCr_2O_7$, $MgSiF_6$, $Mg(HCO_2)_2$, $Mg(IO_3)_2$, $MgMoO_4$, $MgS_2O_3$ and hydrates thereof, based on the total amount of the calcium carbonate particulate material.

4. The calcium carbonate particulate material according to any one of the preceding claims, wherein the calcium carbonate particulate material is ground calcium carbonate, precipitated calcium carbonate or combinations thereof.

5. The calcium carbonate particulate material according to any one of the preceding numbered paragraphs, comprising calcium carbonate in an amount of more than about 95 wt.% based on the total weight of the calcium carbonate particulate material.

6. The calcium carbonate particulate material according to any one of the preceding numbered paragraphs having a $d_{50}$ particle size of about 10.0 $\mu$m or less, as measured by sedimentation using a Sedigraph.

7. A method for preparing a calcium carbonate particulate material according to any one of numbered paragraphs 1 to 6, comprising:

   - providing a calcium carbonate particulate material comprising about 200 ppm or more of water soluble magnesium ions based on the total amount of calcium carbonate material, wherein the amount of water soluble magnesium ions is determined using the method described herein;
   - heating the calcium carbonate particulate material to a temperature of between about 65°C and about 200°C for a duration of up to about 24 h.

8. The method according to numbered paragraph 7, wherein the calcium carbonate particulate material is washed prior to heating.

9. The method according to numbered paragraph 8, wherein the washing is carried out using water and at a temperature of about 25°C.

10. A calcium carbonate particulate material obtainable by the process according to any one of numbered paragraphs 6 to 9.

11. A paint composition comprising the calcium carbonate particulate material according to any one of numbered paragraphs 1 to 6, or numbered paragraph 10.

12. The paint composition according to numbered paragraph 11, further comprising waterglass.

13. The paint composition according to numbered paragraph 12, wherein the waterglass is present in an amount of up to about 5.0 wt.%, based on the total weight of the paint composition.

14. The paint composition according to any one of numbered paragraphs 11 to 13, having a pH value of about 8.5 or above.

15. The paint composition according to any one of numbered paragraphs 11 to 14, which is essentially free from organic biocides.

Europäisches
Patentamt

European
Patent Office

Office européen
des brevets

## EUROPEAN SEARCH REPORT

Application Number

EP 20 30 6213

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Brenntag - Connecting Chemistry: "SOCAL P2 et SOCAL UP - IMERYS (Peinture blanche mate)", , 15 May 2018 (2018-05-15), XP055790217, Retrieved from the Internet: URL:https://www.brenntag.com/media/documents/france/coating-etudes-labo/etude-laboratoire-sur-le-socal-p2-et-socal-up.pdf [retrieved on 2021-03-25] * page 16 * * the whole document * | 1-6 | INV. C01F11/18 C09D1/00 C09C1/02 |
| X | KATHOLNIG PETER ET AL: "Choice of TiO2 extenders for optimised paint performance", EUROPEAN COATINGS FORMULATION, 1 February 2018 (2018-02-01), XP055790125, * page 1; figure 1 * * the whole document * | 1-6 | |
| X | US 5 792 440 A (HUEGE FRED R [US]) 11 August 1998 (1998-08-11) * column 5, lines 60-66; claim 5; examples 1-3 * * the whole document * | 1-6 | TECHNICAL FIELDS SEARCHED (IPC) C09C C01F C09G C01G C09D |
| X | WO 00/34182 A1 (KEMGAS LIMITED; PAUW GERLINGS JOHANNES HENDRIK [CH]) 15 June 2000 (2000-06-15) * example 3 * * the whole document * | 1-6 | |

~~The present search report has been drawn up for all claims~~

| Place of search | Date of completion of the search | Examiner |
|---|---|---|
| The Hague | 26 March 2021 | Follens, Lana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-6

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION**
**SHEET B**

The Search Division considers that the present European patent application does not comply with the
requirements of unity of invention and relates to several inventions or groups of inventions, namely:

```
1. claims: 1-6

        Calcium carbonate particulate material
                            ---

2. claims: 7-10

        Method to prepare calcium carbonate particulate material and
        its product
                            ---

3. claims: 11-15

        Paint composition
                            ---
```

## ANNEX TO THE EUROPEAN SEARCH REPORT
## ON EUROPEAN PATENT APPLICATION NO.

EP 20 30 6213

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2021

| Patent document cited in search report | | Publication date | Patent family member(s) | | Publication date |
|---|---|---|---|---|---|
| US 5792440 | A | 11-08-1998 | AT | 215514 T | 15-04-2002 |
| | | | CA | 2232302 A1 | 27-03-1997 |
| | | | DE | 69620423 T2 | 07-11-2002 |
| | | | DK | 0851839 T3 | 29-07-2002 |
| | | | EP | 0851839 A1 | 08-07-1998 |
| | | | ES | 2175072 T3 | 16-11-2002 |
| | | | PT | 851839 E | 30-09-2002 |
| | | | US | 5792440 A | 11-08-1998 |
| | | | WO | 9711030 A1 | 27-03-1997 |
| WO 0034182 | A1 | 15-06-2000 | AT | 246149 T | 15-08-2003 |
| | | | AU | 773033 B2 | 13-05-2004 |
| | | | BR | 9916127 A | 04-09-2001 |
| | | | CA | 2354691 A1 | 15-06-2000 |
| | | | CN | 1334782 A | 06-02-2002 |
| | | | CZ | 20012037 A3 | 13-02-2002 |
| | | | DE | 69910079 T2 | 22-04-2004 |
| | | | DK | 1150919 T3 | 24-11-2003 |
| | | | EA | 200100649 A1 | 28-02-2002 |
| | | | EP | 1150919 A1 | 07-11-2001 |
| | | | ES | 2205925 T3 | 01-05-2004 |
| | | | HK | 1041681 A1 | 19-07-2002 |
| | | | HU | 0104543 A2 | 28-03-2002 |
| | | | ID | 30402 A | 29-11-2001 |
| | | | JP | 2002531365 A | 24-09-2002 |
| | | | KR | 20010111481 A | 19-12-2001 |
| | | | NZ | 512841 A | 31-10-2003 |
| | | | PL | 348887 A1 | 17-06-2002 |
| | | | PT | 1150919 E | 31-12-2003 |
| | | | SK | 7952001 A3 | 05-02-2002 |
| | | | US | 2006067869 A1 | 30-03-2006 |
| | | | WO | 0034182 A1 | 15-06-2000 |
| | | | ZA | 200105624 B | 22-01-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Paper Coating Pigments. *TAPPI Monograph Series No 30,* 34-35